# EUROPÄISCHE PATENTSCHRIFT

(11) **EP 3 250 884 B1**
(45) Veröffentlichungstag und Bekanntmachung des Hinweises auf die Patenterteilung: **23.01.2019**
(21) Anmeldenummer: 15798119.2
(22) Anmeldetag: 23.11.2015
(51) Int. Cl.: G01B 21/04, G01B 5/00, G01B 5/008

(54) **KOORDINATENMESSGERÄT UND VERFAHREN ZUR KOMPENSATION GROSSER WERKSTÜCKMASSEN**
COORDINATE MEASURING MACHINE AND METHOD FOR COMPENSATING FOR LARGE WORKPIECE MASSES
APPAREIL DE MESURE DE COORDONNÉES ET PROCÉDÉ PERMETTANT DE COMPENSER DES MASSES DE PIÈCE ÉLEVÉES

(30) Priorität: 25.11.2014 DE 102014117244
(43) Veröffentlichungstag der Anmeldung: 06.12.2017
(73) Patentinhaber: Carl Zeiss Industrielle Messtechnik GmbH, 73447 Oberkochen (DE)
(72) Erfinder: ROTH, Roland, 73550 Waldstetten (DE); LEITENBERGER, Werner, 89520 Heidenheim (DE); GRUPP, Guenter, 89558 Boehmenkirch (DE); JACOBS, Oliver, 89551 Koenigsbronn (DE); WUERFEL, Carsten, 73447 Oberkochen (DE)
(74) Vertreter: Witte, Weller & Partner Patentanwälte mbB
(86) Internationale Anmeldenummer: PCT/EP2015/077366
(87) Internationale Veröffentlichungsnummer: WO 2016/083305

(56) Entgegenhaltungen:
- DE-A1- 3 711 455
- DE-A1- 3 814 181
- DE-A1- 10 229 823

## Beschreibung

Die vorliegende Erfindung betrifft ein Koordinatenmessgerät mit einem Messsystem zum Vermessen eines Werkstücks, einer Trägerstruktur zum Tragen des Messsystems, und mit einer Grundplatte zum Abstützen des Werkstücks, wobei die Trägerstruktur zumindest in einer Richtung bewegbar an der Grundplatte geführt ist, und wobei das Koordinatenmessgerät des Weiteren ein erstes Auflagersystem mit mindestens drei Auflagern zum Abstützen der Grundplatte aufweist.

Ein solches Koordinatenmessgerät ist beispielsweise aus der Druckschrift DE 102 29 823 A1 bekannt.

Des Weiteren betrifft die vorliegende Erfindung ein Verfahren zum Kompensieren großer Werkstückmassen auf einem Koordinatenmessgerät.

Koordinatenmessgeräte sind im Stand der Technik allgemein bekannt. Sie dienen dazu, Koordinaten von Werkstücken hochgenau zu erfassen. Auf diese Weise lassen sich beispielsweise einzelne Punkte, Punktbahnen, Dimensionen und/oder Formen des Werkstücks hochgenau erfassen bzw. überprüfen. Derartige Koordinatenmessgeräte werden beispielsweise in der Qualitätssicherung oder in Tätigkeitsgebieten wie dem "Reverse-Engineering" eingesetzt.

Bei Koordinatenmessgeräten ist ein Messsystem, beispielsweise ein taktil und/oder optisch arbeitendes Messsystem, an eine Trägerstruktur gekoppelt, die ein Bewegen und Ausrichten des Messsystems innerhalb eines Messraums ermöglicht. Grundsätzlich sind viele verschiedene Arten von Trägerstrukturen bekannt, beispielsweise Portalaufbauten, Horizontalarmsysteme, Tischmessgeräte und alle weiteren Arten von robotergestützten Messsystemen, um nur einige Beispiele zu nennen. Die Trägerstruktur ist dabei in der Regel auf einer Grundplatte angeordnet, zu der die Trägerstruktur relativ bewegbar ist. Auf der Grundplatte wird dann auch das zu vermessende Werkstück angeordnet.

Die hochgenauen Messanforderungen setzen eine horizontale Ausrichtung der Grundplatte und eine Beibehaltung dieser Ausrichtung während eines Messvorgangs voraus. Dies meint nicht nur ein eventuelles Dämpfen von auftretenden Schwingungen, sondern auch das Ausgleichen von einer sich ändernden Gewichtskraftbeaufschlagung der Grundplatte. Eine derartige Änderung in einer Gewichtskraftbeaufschlagung kann beispielsweise durch das Aufsetzen eines Werkstücks oder aber durch ein Bewegen der Trägerstruktur relativ zu der Grundplatte erzeugt werden.

Die Druckschrift DE 38 088 71 A1 schlägt eine Koordinatenmessmaschine vor, die in einer Stahl-Schweißkonstruktion hergestellt ist und ein kompaktes Grundgestell mit eingeschweißten und gehärteten Führungen sowie eine in das Grundgestell eingeschweißte Messtischplatte besitzt. Das gesamte Grundgestell soll auf insgesamt vier Luftfederelementen ruhen.

Des Weiteren wurde eine dynamische Neigungskorrektur bei Koordinatenmessgeräten vorgeschlagen in Form eines Verfahrens zum Bestimmen wenigstens einer Koordinate einer Struktur im Messvolumen eines auf Auflagern mit variabler Neigung gelagerten Koordinatenmessgerätes, das die Schritte des Erfassens eines Messwerts für die wenigstens eine Koordinate, das Erfassen eines Wertes für die Neigung des Koordinatenmessgerätes und das Korrigieren des Messwertes für die wenigstens eine Koordinate in Abhängigkeit vom erfassten Wert für die Neigung des Koordinatenmessgerätes aufweist. Durch eine Steuerung der als Luftfedern ausgebildeten Auflagern in einem Regelkreis soll eine Neigung des Koordinatenmessgeräts reduziert werden.

Heutzutage werden Auflagersysteme für Koordinatenmessgeräte in der Regel als Dreipunktlagerung oder zurückgeführte Vierpunktlagerung mit drei bzw. vier Luftfederelementen ausgeführt. Die Grundplatten sind in den meisten Fällen aus Granit ausgeführt. Beispielsweise Koordinatenmessgeräte im Portalaufbau können heutzutage mit großen Dimensionen ausgeführt werden, was auch das Vermessen großer Werkstücke ermöglicht. Mit großen Dimensionen der Werkstücke gehen auch entsprechend hohe Massen und Gewichtskräfte einher, die durchaus in einem Bereich von einer bis mehreren Tonnen liegen können. Ist zumindest eine Führung für die Trägerstruktur des Messsystems unmittelbar an der Grundplatte ausgeführt, kann es bei einem Vermessen derartiger Werkstücke mit hohen Massen und daraus resultierenden hohen Gewichtskräften auf die Grundplatte zu unerwünschten Messabweichungen kommen.

Es ist daher eine Aufgabe der vorliegenden Erfindung, ein Koordinatensystem mit einer verbesserten Auflagerung anzugeben.

Gemäß einem ersten Aspekt der Erfindung wird daher gemäß Anspruch 1 ein Koordinatenmessgerät mit einem Messsystem zum Vermessen eines Werkstücks, einer Trägerstruktur zum Tragen des Messsystems und mit einer Grundplatte zum Abstützen des Werkstücks vorgeschlagen, wobei die Trägerstruktur in zumindest einer Richtung bewegbar an der Grundplatte geführt ist, und wobei das Koordinatenmessgerät des Weiteren ein erstes Auflagersystem mit mindestens drei Auflagern zum Abstützen der Grundplatte aufweist, und wobei das Koordinatenmessgerät des Weiteren ein zweites Auflagersystem und eine Regelungseinrichtung zur Regelung des zweiten Auflagersystems abhängig von einer Kraftbeaufschlagung des ersten Auflagersystems aufweist.

Die Regelungseinrichtung ist somit derart ausgebildet, dass sie das zweite Auflagersystem abhängig von einer Kraftbeaufschlagung des ersten Auflagersystems regelt. Die Formulierung "abhängig von einer Kraftbeaufschlagung des ersten Auflagersystems" meint dabei nicht zwingenderweise eine direkte Abhängigkeit von einer Kraftbeaufschlagung. Es ist somit keine direkte Messung der Kraftbeaufschlagung und Eingeben einer eine Kraft darstellende Größe in die Regelungseinrichtung notwendig. Auch eine mittelbare Abhängigkeit von der Kraftbeaufschlagung ist umfasst. Auch eine die Kraftbeaufschlagung mittelbar repräsentierende Größe, beispielsweise ein Druck, eine Verformung oder eine Bewegung kann in die Regelungseinrichtung eingegeben werden.

Es wurde ermittelt, dass Werkstücke mit großen Werkstückmassen große Gewichtskräfte auf die Grundplatte beaufschlagen, woraus sich eine Deformation der Grundplatte ergibt. Diese Deformationen werden, da zumindest eine Führung der Trägerstruktur unmittelbar an der Grundplatte angeordnet ist, direkt auf die entsprechende Führung übertragen. Dies resultiert wiederum in Führungsabweichungen, die sich letztendlich in Messabweichungen bzw. Messfehlern an dem Koordinatenmessgerät niederschlagen.

Es wird daher vorgeschlagen, ein zweites Auflagersystem vorzusehen, das durch eine Regelungseinrichtung geregelt wird. Die Kraftbeaufschlagung des ersten Auflagersystems findet Eingang in die Regelungseinrichtung. Aus dieser Kraftbeaufschlagung lässt sich auf hohe Werkstückmassen und etwaige durch das Anordnen des Werkstücks auf der Grundplatte beaufschlagte Momente rückschließen. Die Regelungseinrichtung kann nun mittels des durch sie geregelten zweiten Auflagersystems den Einfluss einer großen Werkstückmasse zumindest bezüglich der Gewichtskräfte kompensieren. Bei entsprechender Ausgestaltung des zweiten Auflagersystems ebenfalls als Dreipunktlagerung können aus großen Werkstückmassen resultierende hohe Gewichtskraftbeaufschlagungen besonders gut kompensiert werden. Bei einer Ausgestaltung des zweiten Auflagersystems mit vier Auflagern, wobei jedes Auflager individuell bzw. separat regelbar ist, können darüber hinaus durch das Werkstück induzierte Momente ebenfalls kompensiert werden. So gelingt es, aus großen Werkstückmassen resultierende hohe Gewichtskraftbeaufschlagungen und etwaige Momentenbeaufschlagungen des ersten Auflagersystems zu erfassen und geregelt unterstützend sowie kompensierend mittels des zweiten Auflagersystems einzugreifen. So können Deformationen der Grundplatte und daraus resultierende Führungsabweichungen und Messfehler vermieden werden.

Gemäß einem weiteren Aspekt der Erfindung und gemäß Anspruch 15 wird ein Verfahren zum Kompensieren großer Werkstückmassen auf einem Koordinatenmessgerät mit einem Messsystem zum Vermessen eines Werkstücks, einer Trägerstruktur zum Tragen des Messsystems und einer Grundplatte zum Abstützen des Werkstücks vorgeschlagen, wobei die Trägerstruktur in zumindest einer Richtung bewegbar an der Grundplatte geführt ist, und wobei das Koordinatenmessgerät des Weiteren ein erstes Auflagersystem mit mindestens drei Auflagern zum Abstützen der Grundplatte, ein zweites Auflagesystem und eine Regelungseinrichtung zur Regelung des zweiten Auflagersystems abhängig von einer Kraftbeaufschlagung des ersten Auflagersystems aufweist, und wobei das Verfahren die Schritte des Kalibrierens eines Referenzzustands der Grundplatte mittels des ersten Auflagersystems, das Anordnen eines mittels des Koordinatenmessgeräts zu vermessenden Werkstücks auf der Grundplatte, des Erfassens von Größen, die die von dem Werkstück auf die mindestens drei Auflager des ersten Auflagersystems beaufschlagten Kräfte repräsentieren, und des Regelns des zweiten Auflagersystems mittels der Regelungseinrichtung aufweist, so dass sich wieder der Referenzzustand einstellt.

Auf diese Weise wird es möglich, die durch das Werkstück beaufschlagten Kräfte und Momente mittels des zweiten Auflagersystems zu kompensieren. Der Referenzzustand des ohne Werkstück angeordneten Koordinatenmessgeräts wird eingangs kalibriert. Beispielsweise können im Falle der Bereitstellung des ersten Auflagersystems über Luftfedern, insbesondere mechanisch geregelte Luftfedern, die in den Luftfedern im Referenzzustand vorherrschenden Drücke erfasst werden. Der Referenzzustand weist insbesondere eine horizontal ausgerichtete Grundplatte auf. Eine Belastung mittels einer großen Werkstückmasse führt zwangsläufig zu einer Druckerhöhung in den als Luftfedern ausgestalteten Auflagern des ersten Auflagersystems. Diese Abweichung vom Referenzzustand kann erfasst und mittels des zweiten Auflagersystems derart kompensiert werden, dass sich in dem Luftfedern des ersten Auflagersystems wieder die Druckzustände des Referenzzustands einstellen. Hohe Gewichtskräfte des Werkstücks werden somit zusätzlich durch das zweite Auflagersystem aufgenommen und beaufschlagte Momente kompensiert. Auch so werden Deformationen der Grundplatte und daraus resultierende Führungsabweichungen und Messfehler vermieden.

Die eingangs gestellte Aufgabe wird daher vollkommen gelöst.

In einer Ausgestaltung des Koordinatenmessgeräts kann vorgesehen sein, dass die mindestens drei Auflager des ersten Auflagersystems jeweils durch eine Haupt-Luftfedereinrichtung ausgebildet sind.

Auf diese Weise werden die mindestens drei Auflager des ersten Auflagersystems jeweils durch eine oder mindestens eine Luftfeder ausgebildet. Der Begriff "Haupt-Luftfedereinrichtung" stellt dabei darauf ab, dass eine "Luftfedereinrichtung" mindestens eine, insbesondere aber auch mehrere Luftfedern aufweisen kann. Die Begrifflichkeit "Haupt-Luftfedereinrichtung" ist dabei lediglich gewählt, um die Luftfedereinrichtungen des ersten Auflagersystems von den "Neben-Luftfedereinrichtungen" des zweiten Auflagersystems begrifflich zu unterscheiden. Weitere Bedeutungen kommen den Bestandteilen "Haupt-" und "Neben-" nicht bei. Auf diese Weise wird mittels Luftfedern eine Dreipunktlagerung oder beispielsweise eine zurückgeführte Vierpunktlagerung als erstes Auflagersystem bereitgestellt. Selbstverständlich sind grundsätzlich auch andere Dämpfungs- und/oder Federsysteme für das erste Auflagersystem denkbar, beispielsweise hydraulische Federn, mechanische Systeme wie Spindeln oder Nivellierschuhe.

In einer weiteren Ausgestaltung des Koordinatenmessgeräts kann vorgesehen sein, dass das erste Auflagersystem mindestens drei Regelungsventilanordnungen zum Steuern der mindestens drei Haupt-Luftfedereinrichtungen aufweist, insbesondere wobei die mindestens drei Regelungsventilanordnungen jeweils eine mechanische Regelungsventilanordnung sind.

Auf diese Weise wird bereitgestellt, dass das erste Auflagersystem versucht, beispielsweise eine eingangs kalibrierte horizontale Grundausrichtung der Grundplatte beizubehalten. Insbesondere im Falle einer mechanischen Regelungsventilanordnung kann hier eine automatische Regelung implementiert werden, bei der eine erhöhte Kraftbeaufschlagung zwar eine Erhöhung des Luftfederdrucks zur Folge hätte, die Positionierung und horizontale Ausrichtung jedoch beibehalten werden kann. Auf diese Weise kann die relative Positionierung der mindestens drei Auflagerpunkte des ersten Auflagersystems beibehalten werden.

In einer weiteren Ausgestaltung des Koordinatenmessgeräts kann vorgesehen sein, dass das erste Auflagersystem vier Haupt-Luftfedereinrichtungen aufweist, wobei einer ersten und einer vierten Haupt-Luftfedereinrichtung eine gemeinsame erste Regelungsventilanordnung zugeordnet ist, wobei einer zweiten Haupt-Luftfedereinrichtung eine zweite Regelungsventilanordnung zugeordnet ist, und wobei einer dritten Haupt-Luftfedereinrichtung eine dritte Regelungsventilanordnung zugeordnet ist.

Auf diese Weise wird eine zurückgeführte Vierpunktlagerung bereitgestellt. Durch die Zusammenfassung der ersten und vierten Haupt-Luftfedereinrichtung kann eine Überbestimmung des Systems vermieden werden. Die erste und vierte Haupt-Luftfedereinrichtung werden gemeinsam geregelt. Gleichzeitig wird eine sicherere Auflage der Grundplatte bereitgestellt.

In einer weiteren Ausgestaltung des Koordinatenmessgeräts kann vorgesehen sein, dass das erste Auflagersystem mindestens drei Kraftbeaufschlagungssensoren zur Erfassung einer Größe aufweist, die eine auf mindestens ein Auflager beaufschlagte Kraft repräsentiert, insbesondere, wobei die erfasste Größe ein Luftdruck ist.

Auf diese Weise ist es möglich, eine auf das erste Auflagersystem beaufschlagte Kraft zu ermitteln. Dies kann beispielsweise durch eine direkte Ermittlung der Kraft erfolgen, beispielsweis aber auch durch eine mittelbare Erfassung. Eine mittelbare Erfassung lässt sich beispielsweise über Wegmessgeber, beispielsweise Dehnmessstreifen oder Tauchspulen realisieren. Vorzugsweise wird ein Luftdruck in einer Haupt-Luftfedereinrichtung erfasst, über den auf die beaufschlagte Kraft rückgeschlossen werden kann. Aus den beaufschlagten Kräften wiederum kann auf die Werkstückmasse rückgeschlossen werden und dann in der Regelungseinrichtung über die Notwendigkeit und, wenn ja, die Art und Weise der Unterstützung durch das zweite Auflagersystem entschieden werden.

In einer weiteren Ausgestaltung des Koordinatenmessgeräts kann vorgesehen sein, dass jeder Regelungsventilanordnung des ersten Auflagersystems ein Sensor zugeordnet ist.

Auf diese Weise kann für jede Regelungsventilanordnung ein eigener Regelkreis über den entsprechenden Sensor geschlossen werden.

In einer weiteren Ausgestaltung des Koordinatenmessgeräts kann vorgesehen sein, dass das zweite Auflagersystem mindestens eine Neben-Luftfedereinrichtung aufweist, die ein Auflager des zweiten Auflagersystems ausbildet.

Auch in dem zweiten Auflagersystem können also die oder das Auflager des zweiten Auflagersystems durch jeweils eine Luftfedereinrichtung bereitgestellt sein, wobei jede Luftfedereinrichtung eine oder mehrere Luftfederelemente aufweisen kann. Grundsätzlich sind auch hier andere Arten von Auflagern denkbar, soweit diese mittels einer Regelungseinrichtung regelbar sind, insbesondere in ihrer Höhe regelbar sind. Beispielsweis sind auch hier hydraulische Auflager oder mechanisch regelbare Auflager, wie beispielsweise Nivellierschuhe oder auch Spindeleinrichtungen denkbar.

In einer weiteren Ausgestaltung des Koordinatenmessgeräts kann vorgesehen sein, dass das zweite Auflagersystem mindestens drei Auflager aufweist, und wobei jedes Auflager durch eine Neben-Luftfedereinrichtung ausgebildet ist.

Auf diese Weise wird auch das zweite Auflagersystem als Dreipunktlagerung oder beispielsweise als zurückgeführte Vierpunktlagerung bereitgestellt, so dass das zweite Auflagersystem auch eindeutig bestimmt ist und des Weiteren Neigungen oder Momente durch das zweite Auflagersystem durch entsprechende Regelung ausgeglichen werden können.

In einer weiteren Ausgestaltung des Koordinatenmessgeräts kann vorgesehen sein, dass das zweite Auflagersystem mindestens drei Regelungsventilanordnungen zum Steuern der mindestens drei Neben-Luftfedereinrichtungen aufweist, insbesondere wobei die mindestens drei Regelungsventilanordnungen jeweils eine elektronische Regelungsventilanordnung sind.

Auch auf diese Weise kann für jede Neben-Luftfedereinrichtung ein eigener Regelkreis mit dazugehöriger Regelungsventilanordnung bereitgestellt sein. Insbesondere ist jede Regelungsventilanordnung als elektronische Regelungsventilanordnung bereitgestellt, die dann durch die Regelungseinrichtung angesteuert werden kann.

In einer weiteren Ausgestaltung des Koordinatenmessgeräts kann vorgesehen sein, dass das zweite Auflagersystem vier Neben-Luftfedereinrichtungen aufweist, wobei einer ersten und einer vierten Neben-Luftfedereinrichtungen eine gemeinsame erste Regelungsventilanordnung zugeordnet ist, wobei einer zweiten Neben-Luftfedereinrichtungen eine zweite Regelungsventilanordnung zugeordnet ist, und wobei einer dritten Neben-Luftfedereinrichtungen eine dritte Regelungsventilanordnung zugeordnet ist.

Auf diese Weise kann auch für das zweite Auflagersystem eine zurückgeführte Vierpunktlagerung bereitgestellt werden. Auf diese Weise können insbesondere hohe Gewichtskräfte durch das zweite Auflagersystem kompensiert werden. Insbesondere im Zusammenhang mit einem entsprechend ausgestalteten ersten Auflagersystem, das beispielweise ebenfalls als zurückgeführte Vierpunktlagerung ausgestaltet ist, kann so eine effektive Kompensation bereitgestellt werden, da beispielsweise einer jeweiligen Haupt-Luftfedereinrichtung eine entsprechende Neben-Luftfedereinrichtung zugeordnet werden kann.

In einer weiteren Ausgestaltung des Koordinatenmessgeräts kann vorgesehen sein, dass das zweite Auflagersystem mindestens vier Neben-Luftfedereinrichtungen aufweist, wobei das Koordinatenmessgerät des Weiteren eine der Anzahl von Neben-Luftfedereinrichtungen entsprechende Anzahl von Regelungsventilanordnungen aufweist, und jede Regelungsventilanordnung genau einer Neben-Luftfedereinrichtung zugeordnet ist.

Auf diese Weise kann das zweite Auflagersystem auch als eine echte Vierpunktlagerung bereitgestellt werden, bei der jede der Neben-Luftfedereinrichtungen separat regelbar bzw. steuerbar ist. Auf diese Weise können hohe Gewichtskräfte und auch Momente durch das zweite Auflagersystem kompensiert werden. Auch im Zusammenhang mit einem ersten Auflagersystem, das beispielweise ebenfalls als zurückgeführte Vierpunktlagerung ausgestaltet ist, kann so eine effektive Kompensation bereitgestellt werden. Beispielsweise kann das zweite Auflagersystem vier Neben-Luftfedereinrichtungen aufweist, wobei einer ersten Neben-Luftfedereinrichtung eine erste Regelungsventilanordnung zugeordnet ist, wobei einer zweiten Neben-Luftfedereinrichtungen eine zweite Regelungsventilanordnung zugeordnet ist, wobei einer dritten Neben-Luftfedereinrichtungen eine dritte Regelungsventilanordnung zugeordnet ist, und wobei einer vierten Neben-Luftfedereinrichtungen eine vierte Regelungsventilanordnung zugeordnet ist. Insbesondere können vier Neben-Luftfedereinrichtungen derart angeordnet sein, dass sie an den Eckpunkten eines, insbesondere imaginären, Rechtecks angeordnet sind. Dies ermöglicht aufgrund zweier senkrecht aufeinander stehender Achsen eine einfache Kompensation von Momenten.

In einer weiteren Ausgestaltung des Koordinatenmessgeräts kann vorgesehen sein, dass eine Anzahl von Auflagern des ersten Auflagersystems einer Anzahl von Auflagern des zweiten Auflagersystems entspricht, und wobei eine Anzahl von Regelungsventilanordnungen des ersten Auflagersystems einer Anzahl von Regelungsventilanordnungen des zweiten Auflagersystems entspricht, und wobei eine Anzahl von Regelungsventilanordnungen des ersten Auflagersystems einer Anzahl von Kraftbeaufschlagungs-Sensoren zur Erfassung einer Größe, die eine auf mindestens ein Auflager des ersten Auflagersystems beaufschlagte Kraft repräsentiert, entspricht.

Auf diese Weise werden das erste Auflagersystem und das zweite Auflagersystem in einer entsprechenden Ausgestaltung bereitgestellt. Dies ermöglicht es, die Kompensation der Kraftbeaufschlagung des ersten Auflagersystems durch das zweite Auflagersystem regelungstechnisch einfach zu halten.

In einer weiteren Ausgestaltung des Koordinatenmessgeräts kann vorgesehen sein, dass die Auflager des zweiten Auflagersystems zwischen den Auflagern des ersten Auflagersystems an der Grundplatte angeordnet sind.

Wie eingangs geschildert wurde, soll insbesondere eine Durchbiegung der Grundplatte durch hohe Gewichtskräfte des Werkstücks vermieden werden. Diese Durchbiegung wird insbesondere zwischen den Auflagern des ersten Auflagersystems auftreten, wenn diese relativ weit voneinander beabstandet sind. Daher ist es insbesondere vorteilhaft, die Auflage des zweiten Auflagersystems zwischen den Auflagern des ersten Auflagersystems einzuordnen, um diese Durchbiegungen auszugleichen. Dabei ist der Begriff "zwischen" nicht zwingend zu verstehen, dass ein Auflager des zweiten Auflagersystems auf einer geraden Linie zwischen zwei Auflagern des ersten Auflagersystems angeordnet sein muss, vielmehr sind die Auflager des zweiten Auflagersystems innerhalb eines Bereichs bzw. eines von den Auflagern des ersten Auflagersystems umschlossenen Bereichs anzuordnen.

In einer weiteren Ausgestaltung des Koordinatenmessgeräts kann vorgesehen sein, dass die Auflager des ersten Auflagersystems eine Auflagerfläche an der Grundplatte aufspannen, wobei die Auflager des zweiten Auflagersystems innerhalb der Auflagerfläche an der Grundplatte angeordnet sind.

Wie voranstehend ausgeführt kann eine durch die Auflage des ersten Auflagersystems an der Grundplatte aufgespannte Auflagerfläche definiert werden. Vorzugsweise innerhalb dieser Auflagerfläche sind dann die Auflager des zweiten Auflagersystems an der Grundplatte anzuordnen. Auf diese Weise können Durchbiegungen der Grundplatte effektiv vermieden werden.

In einer weiteren Ausgestaltung des Koordinatenmessgeräts kann vorgesehen sein, dass die Grundplatte ein geometrisches Zentrum aufweist, und wobei ein größter Abstand eines Auflagers des zweiten Auflagersystems zu dem geometrischen Zentrum kleiner ist als ein kleinster Abstand eines Auflagers des ersten Auflagersystems zu dem geometrischen Zentrum.

Dabei wird üblicherweise die Grundplatte als rechteckige Platte ausgestaltet sein, so dass das geometrische Zentrum auf dem Schnittpunkt der beiden Diagonalen der Grundplatte liegt. Um Deformationen der Grundplatte zu vermeiden, ist es vorteilhaft, das zweite Auflagersystem bzw. dessen Auflager näher an dem geometrischen Zentrum anzuordnen als die Auflager des ersten Auflagersystems. Auch dieses dient dazu, Deformationen aufgrund hoher Gewichtskräfte zu vermeiden.

In einer weiteren Ausgestaltung des Koordinatenmessgeräts kann vorgesehen sein, dass eine von den Auflagern des zweiten Auflagersystems eingeschlossene Fläche ein geometrisches Zentrum der Grundplatte beinhaltet, insbesondere wobei die von den Auflagern des zweiten Auflagersystems eingeschlossene Fläche zwischen 20% und 40% der Größe einer von den Auflagern des ersten Auflagersystems eingeschlossene Fläche entspricht.

Das geometrische Zentrum der Grundplatte liegt streng genommen in dem Inneren der Grundplatte, da diese eine gewisse Dicke aufweist. Demgegenüber liegt die von den Auflagern des zweiten Auflagersystems eingeschlossene Fläche auf einer Oberfläche der Grundplatte. In diesem Sinne soll das "Beinhalten" des geometrischen Zentrums bedeuten, dass die senkrechte Projektion des geometrischen Zentrums auf diese Oberfläche der Grundplatte meint, der die Auflager des zweiten Auflagersystems bzw. des ersten Auflagersystems angeordnet sind. Das zweite Auflagersystem ist also nahe an diesem geometrischen Zentrum angeordnet und schließt eine verglichen mit der Fläche des ersten Auflagersystems kleine Fläche ein. Dies kann ebenfalls vorzugsweise dazu dienen, eine Deformation der Grundplatte zwischen den Auflagern des ersten Auflagersystems effektiv zu vermeiden.

In einer weiteren Ausgestaltung des Koordinatenmessgeräts kann vorgesehen sein, dass die Trägerstruktur ein Portalaufbau ist, insbesondere wobei der der Portalaufbau ein an der Grundplatte in einer ersten Richtung bewegbar geführtes Portal, einen an dem Portal in einer zu der ersten Richtung senkrechten zweiten Richtung bewegbar geführten Schlitten und eine an dem Schlitten in einer zu der ersten und der zweiten Richtung senkrechten dritten Richtung bewegbar geführte Pinole aufweist.

Auf diese Weise weist die Trägerstruktur einen üblichen Portalaufbau mit Portal, Schlitten und Pinole auf. Dies ermöglicht eine dreidimensionale Bewegbarkeit eines Messsystems in dem Messraum. Insbesondere bei dieser Art von Trägerstruktur können, da das Portal unmittelbar an der Grundplatte geführt ist, besonders effektiv Führungsabweichungen und Messungenauigkeiten vermieden werden.

In einer weiteren Ausgestaltung des vorgeschlagenen Verfahrens kann vorgesehen sein, dass vor dem Schritt des Regelns und nach dem Schritt des Erfassens festgestellt wird, dass die von dem Werkstück auf die mindestens drei Auflager des erste Auflagersystems beaufschlagten Kräfte oberhalb eines vorbestimmten Schwellwerts liegen.

Auf diese Weise kann vorgesehen werden, dass das zweite Auflagersystem nur dann "aktiv" wird und geregelt wird, wenn festgestellt wird, dass tatsächlich ein Werkstück mit großer Masse und daraus resultierenden sehr hohen Gewichtskräften auf dem Koordinatenmessgerät angeordnet wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine schematische Ansicht einer Ausführungsform eines Koordinatenmessgeräts,
- Fig. 2: eine schematische isometrische Ansicht einer weiteren Ausführungsform eines Koordinatenmessgeräts,
- Fig. 3: eine beispielhafte schematisierte Darstellung von Auflagern des ersten und des zweiten Auflagersystems,
- Fig. 4: eine Darstellung einer möglichen Anordnung der Auflager eines ersten und eines zweiten Auflagersystems, insbesondere in einem Koordinatenmessgerät nach Fig. 2, und
- Fig. 5: eine Ausführungsform eines Verfahrens zum Kompensieren großer Werkstückmassen auf einem Koordinatenmessgerät.

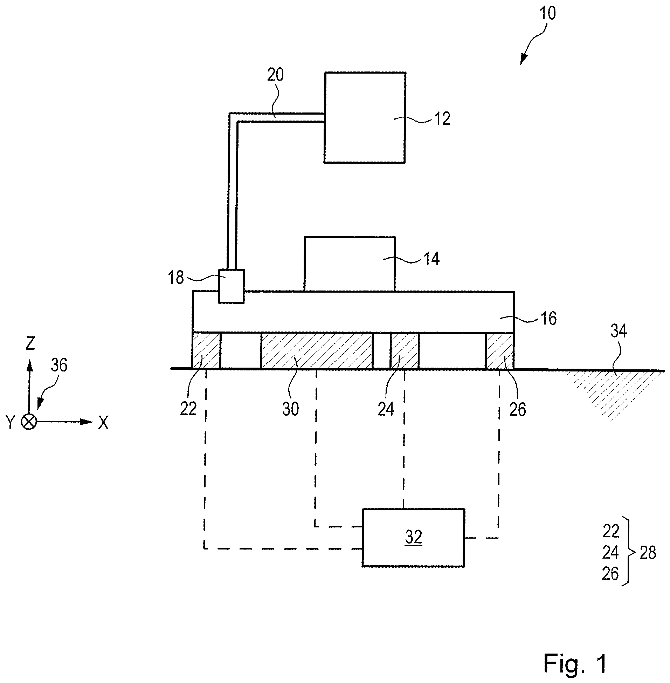

Fig. 1 zeigt ein Koordinatenmessgerät 10 gemäß einer Ausführungsform. Das Koordinatenmessgerät weist ein Messsystem 12 auf, das beispielsweise einen optischen und/oder einen taktilen Sensor aufweisen kann. Das Messsystem 12 dient zur Vermessung von Koordinaten eines Werkstücks 14. Das Werkstück 14 ist auf einer Grundplatte 16 des Koordinatenmessgeräts 10 angeordnet.

An der Grundplatte 10 ist eine Führung 18 vorgesehen, mit der eine Trägerstruktur 20 gekoppelt ist. Ebenfalls mit der Trägerstruktur 20 ist das Messsystem 12 gekoppelt, das auf diese Weise im Raum bewegt werden kann. In der dargestellten Ausführungsform dient beispielsweise die Führung 18 zu einer Bewegung in Y-Richtung, so dass durch Bewegung der Trägerstruktur 20 das Messsystem 12 ebenfalls in Y-Richtung bewegt werden kann.

Das Koordinatenmessgerät 10 weist ein erstes Auflagersystem 28 auf, das in der dargestellten Ausführungsform drei Auflager 22, 24 und 26 aufweist, so dass eine eindeutige Dreipunktlagerung des Koordinatenmessgeräts 10 auf einem Boden 34 gegeben ist. Um aufgrund hoher Masse des Werkstücks 14 Durchbiegungen der Grundplatte 16 zu vermeiden, ist des Weiteren ein zweites Auflagersystem schematisch dargestellt und mit dem Bezugszeichen 30 bezeichnet. Des Weiteren weist das Koordinatenmessgerät 10 eine Regelungseinrichtung 32 auf, die das zweite Auflagesystem 30 regelt. Die auf die Auflager 22, 24, 26 des ersten Auflagersystems 28 beaufschlagten Kräfte werden zumindest mittelbar in Form einer die entsprechende Kraft repräsentierenden Größe erfasst und in die Regelungseinrichtung 32 eingegeben. Dabei kann an jedem Auflager 22, 24, 26 eine die entsprechend auf das jeweilige Auflager 22, 24, 26 beaufschlagte Kraft repräsentierende Größe erfasst und in die Regelungseinrichtung eingegeben werden. Bei der Größe kann es sich beispielweise direkt um die Kraft, aber auch um eine mittelbare Größe handeln. Beispielsweise im Fall der Ausbildung der Auflager 22, 24, 26 als Luftfedern kann dies in Form eines gemessenen Drucks erfolgen.

Die Anordnung der Auflager 22, 24, 26 ist lediglich beispielhaft zu verstehen und erfolgt beispielsweise auch versetzt in Y-Richtung, d.h. senkrecht zur Zeichenebene, um eine entsprechende Lagerung der sich ebenfalls in Y-Richtung senkrecht zur Zeichenebene erstreckenden Grundplatte, insbesondere einer rechteckigen Grundplatte 16, zu ermöglichen. Infolgedessen ist auch lediglich die Anordnung des zweiten Auflagersystems 30 lediglich schematisch zu verstehen. Das zweite Auflagersystem kann mindestens eins, insbesondere mindestens drei Auflager aufweisen. Auf diese Weise wird es möglich, bei entsprechend hohen, auf die Auflager 22, 24, 26 des ersten Auflagersystems 28 beaufschlagten Gewichtskräften, die Gewichtskräfte zu erfassen und durch die Regelungseinrichtung 32 eine Aktuierung des zweiten Auflagersystems 30 zu veranlassen, um die Grundplatte 16 weiter abzustützen und ihre Deformation zu vermeiden. Des Weiteren können durch eine eventuelle unsymmetrische Anordnung des Werkstücks verursachte Momente und Neigungen in der Grundplatte 16 durch das zweite Auflagersystem 30 ausgeglichen werden.

Ein kartesisches Koordinatensystem 36 veranschaulicht die Raumrichtungen. Die Grundplatte 16 erstreckt sich in X-Richtung und Y-Richtung. Senkrecht dazu verläuft die Z-Richtung.

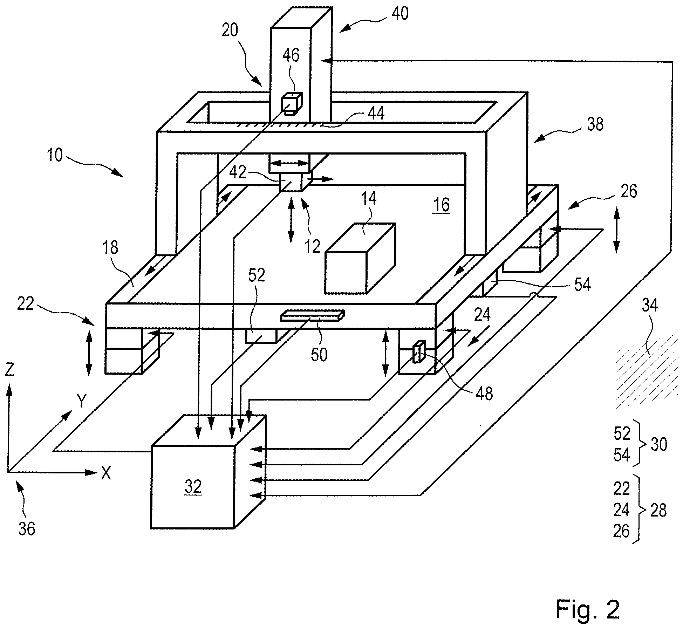

Die Fig. 2 zeigt eine weitere Ausführungsform eines Koordinatenmessgeräts 10. Gleiche Elemente sind dabei mit gleichen Bezugszeichen gekennzeichnet und werden im Folgenden nicht erneut erläutert.

Das Koordinatenmessgerät 10 der Fig. 2 weist einen Portalaufbau als Trägerstruktur 20 auf. Die Trägerstruktur fasst daher ein Portal 38, das in Y-Richtung relativ zu der Grundplatte 16 entlang einer Führung 18 bewegbar ist. Die Bewegbarkeit ist durch entsprechende Pfeile gekennzeichnet. Relativ zu dem Portal 38 ist ein Schlitten 40 in X-Richtung bewegbar. Auch diese Bewegbarkeit ist schematisch durch Pfeile gekennzeichnet. In dem Schlitten 40 wiederum ist eine Pinole 42 in Z-Richtung bewegbar angeordnet. An der Pinole ist das Messsystem 12 angeordnet. Auf diese Weise ist das Messsystem 12 in allen drei Raumrichtungen X, Y und Z mittels der Trägerstruktur 20 relativ zu der Grundplatte 16 bewegbar. Auf der Grundplatte 16 wird ebenfalls das Werkstück 14 angeordnet.

Zum Erfassen der Position des Portals, des Schlittens und der Pinole sind Skalen und entsprechende Weggeber vorgesehen, die mit der Regelungseinrichtung 32 verbunden sind und entsprechende Werte an diese eingeben. Schematisch ist lediglich eine Skala 44 und ein Weggeber 46 veranschaulicht, der zur Erfassung einer Position des Schlittens 40 gegenüber dem Portal 38 dienen kann. Entsprechende weitere Skalen und Weggeber zur Erfassung der Position des Portals relativ zu der Grundplatte 16 bzw. der Pinole 42 relativ zu dem Schlitten 40 sind aus Übersichtsgründen nicht dargestellt.

Des Weiteren schematisch dargestellt ist ein Kraftbeaufschlagungssensor 48, der zur Erfassung einer Kraft repräsentierenden Größe dient. In der dargestellten Ausführung sind die Auflager 22, 24 und 26 des ersten Auflagersystems 28 als Luftfedereinrichtungen ausgebildet. Diese weisen jeweils mindestens eine Luftfeder auf. Insbesondere weisen die Auflager des ersten Auflagersystems mechanisch-pneumatische Regelventile auf. Diese werden im Folgenden noch kurz erläutert. Beispielsweise kann in diesem Fall der Kraftbeaufschlagungssensor als Drucksensor ausgebildet sein, der innerhalb des jeweiligen Federelements den Druck misst. Aus dem sich einstellenden Druck kann so auf die Kraftbeaufschlagung des Federelements rückgeschlossen werden. Entsprechende Kraftbeaufschlagungssensoren können selbstverständlich auch an den Auflagern 22 und 26 vorgesehen sein. Insoweit ist die Grundplatte 16 über das erste Auflagersystem 28 auf dem Boden 34 abgestützt.

Grundsätzlich ist es möglich, dass zusätzlich zu den Kraftbeaufschlagungssensoren 48 beispielsweise auch ein Neigungssensor 50 vorgesehen sein kann, der direkt eine Neigung der Grundplatte 16 ermittelt. Zusätzlich oder alternativ zu einem solchen Neigungssensor 50 können an der Grundplatte 16 auch Weggeber (nicht dargestellt) vorgesehen sein, die ein Absenken der Grundplatte 16 an bestimmten Punkten erfassen, insbesondere an oder nahe der Auflager 22, 24, 26. Auf diese Weise kann, gegebenenfalls redundant, eine Neigung der Grundplatte 16 erfasst und ggf. kompensiert werden.

Schematisch dargestellt sind des Weiteren zwei Auflager 52, 54 des zweiten Auflagersystems 30. Grundsätzlich kann das zweite Auflagersystem 30, wie im Folgenden noch erläutert wird, auch ein drittes Auflager und ein viertes Auflager aufweisen, die aus Ansichtsgründen in der Fig. 2 jedoch nicht dargestellt sind. Gleiches gilt für das erste Auflagersystem 28, das des Weiteren noch ein viertes Auflager aufweisen kann.

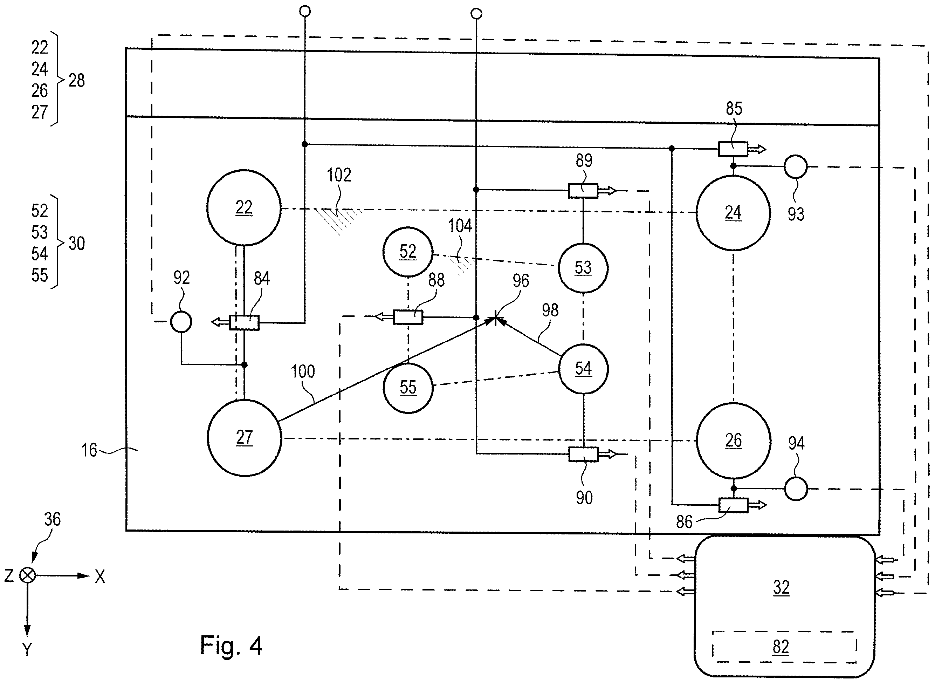

Im Falle einer sehr großen Masse des Werkstücks 14 kann es vorkommen, dass die Grundplatte 16 deformiert wird. Derartig große Werkstückmassen, bei denen eine Deformation der Grundplatte 16 drohen kann, können über den oder die Kraftbeaufschlagungssensoren 48 erfasst werden. Dann kann über das zweite Auflagersystem 30 mittels der Regelungseinrichtung eine derartige Deformation kompensiert werden. Vorzugsweise ist dabei, wie in der Fig. 2 ersichtlich und im Folgenden im Zusammenhang mit der Fig. 4 noch detaillierter erläutert, das zweite Auflagersystem 30 dabei zwischen den Auflagern 22, 24, 26 des ersten Auflagersystems 28 angeordnet. Eine große Masse des Werkstücks 14 wird in erster Linie zu einem Durchbiegen zwischen den Auflagern 22, 24 und 26 führen, die dann mittels der Auflager 52, 54 des zweiten Auflagersystems 30 zu kompensieren ist. Im Falle einer exzentrischen oder unsymmetrischen Anordnung des Werkstücks 14 kann es darüber hinaus zu hohen Momentenbelastungen der Grundplatte 16 und des ersten Auflagersystems 28 kommen, die mittels des zweiten Auflagersystems dann ebenfalls ausgeglichen werden können.

Insbesondere kann die Regelung durch die Regelungseinrichtung 32 derart erfolgen, dass ein ohne das Werkstück 14 kalibrierter Referenzzustand des ersten Auflagersystems 28 und eine zugehörige Kraftbeaufschlagung des ersten Auflagersystems 28 wieder hergestellt wird. Das zweite Auflagersystem 30 ist dann somit dazu vorgesehen, nur die durch das Werkstück 14 beaufschlagten Kräfte aufzunehmen und etwaige eingeleitete Momente zu kompensieren.

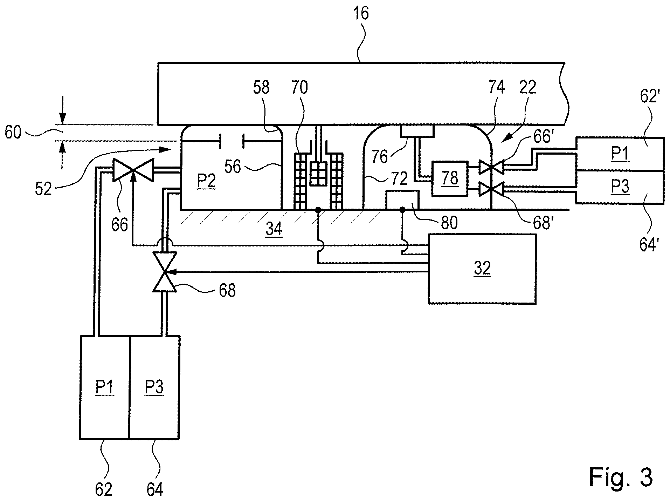

Die Fig. 3 zeigt schematisch einen möglichen Aufbau sowohl eines Auflagers mit mechanischer Regelungsventilanordnung als auch eines Auflagers mit elektronischer Regelungsventilanordnung. Im Folgenden wird dieser Aufbau lediglich beispielhaft anhand eines einzelnen Auflagers 22 eines ersten Auflagersystems beschrieben, das eine mechanische Regelungsventilanordnung aufweist. Diese ist in dem vorliegenden Beispiel ein Auflager 52 des zweiten Auflagersystems 30 zugeordnet, das eine elektronische Regelungsventilanordnung aufweist.

Die elektronische Regelungsventilanordnung 52 weist in der dargestellten Ausführungsform eine Luftfedereinrichtung mit einer Luftfeder auf. Die Luftfeder weist einen Grundkörper 56 auf, der beispielsweise aus Metall ausgebildet ist und an den sich eine Membran 58 anschließt, die durch entsprechendes Variieren eines Innendrucks P2 nach außen gewölbt werden und in ihrer letztendlichen Auflagehöhe 60 variiert werden kann. Auf diese Weise kann die Höhe der Grundplatte 16 an entsprechenden Auflagerstellen variiert werden.

Mit dem von dem Grundkörper 56 umschlossenen Innenraum sind zwei Ventile 66, 68 gekoppelt. Diese sperren bzw. geben frei einen jeweiligen Druckraum 62, 64. In dem Druckraum 62 liegt ein Druck P1 an, der kleiner als der Druck P2 ist. In dem Druckraum 64 liegt ein Druck P3 an, der größer als der Druck P2 ist. Auf diese Weise kann der Druck P2 innerhalb des Grundkörpers 56 durch elektronisches Schalten der Ventile 66, 68 über die Regelungseinrichtung 32 variiert werden.

Das Auflager 22 des ersten Auflagersystems 28 weist eine mechanische Regelungsventilanordnung auf. Entsprechende Druckräume 62' und 64' weisen die Drücke P1 und P3 auf. Beispielsweise kann durchaus vorgesehen sein, alle Luftfedern an dieselben Druckreservoirs anzubinden. Das Auflager 22 weist ebenfalls einen Grundkörper 72 auf, der mit einer entsprechenden Membran 74 gekoppelt ist. Jedoch ist ein Stößel 76 vorgesehen, der sich je nach Höhe der Grundplatte 16 absenkt bzw. anhebt. Mit diesem Stößel 76 ist eine mechanische Kinematik 68 gekoppelt, die lediglich schematisch dargestellt ist. Diese bedient je nach Position des Stößels ein Ventil 66' oder 68'. Wird somit der Stößel 76 aus einer kalibrierten Referenzstellung herausbewegt, wird entweder der Druck in den Innenraum des Auflagers 22 erhöht oder abgesenkt. So kann beispielsweise mechanisch die Rückkehr in die einmal kalibrierte Referenzstellung bereitgestellt werden. Daher lässt sich mittels eines Drucksensors 80 ein Druck in dem Auflager ermitteln und daraus mittelbar die auf das Auflager 22 wirkende Kraft bestimmen, so dass diese der Regelungseinrichtung 32 zur Regelung des zugeordneten Auflagers 52 des zweiten Auflagersystems 30 zur Verfügung steht.

Des Weiteren ist beispielhaft ein Weggeber 70 dargestellt. Dieser kann zusätzlich zur Bestimmung der Position der Grundplatte 16 vorgesehen sein, um ggf. redundant deren Lage zu ermitteln und auch hierüber ggf. auf die auf die Auflage beaufschlagten Kräfte rückzuschließen. Ein solcher Weggeber kann ein Maß für die Einfederung des entsprechenden Auflagers übermitteln. Insbesondere können mehrere derartiger Weggeber an der Grundplatte 16 angeordnet sein, um auch eine Neigung der Grundplatte ebenfalls redundant zu dem voranstehend erwähnten Neigungssensor zu ermitteln.

Die Fig. 4 zeigt eine schematische Ansicht der Anordnung der Auflager 22, 24, 26 und 27 des ersten Auflagersystems 28 und der Auflager 52, 53, 54, 55 des zweiten Auflagersystems 30 an der Grundplatte 16, insbesondere der Grundplatte 16 des Koordinatenmessgeräts in der Fig. 2. Beispielhaft wird dies anhand einer Ansicht von unten auf die Grundplatte erläutert, d.h. mit Blick in positive Z-Richtung.

In der Fig. 4 dargestellt ist die Grundplatte 16, die Regelungseinrichtung 32 und eine ggf. zur Regelung des zweiten Auflagersystems 30 und/oder auch des ersten Auflagersystems 28 vorgesehene Regelungsapplikation 80.

Die Auflager 22, 24, 26 und 27 des ersten Auflagersystems 28 sind relativ weit auseinander als zurückgeführte Vierpunktlagerung ausgeführt. Das erste Auflager 22 und das vierte Auflager 27 werden über eine gemeinsame Regelungsventilanordnung 84 geregelt. Das Auflager 24 wird über eine mechanische Regelungsventilanordnung 85 geregelt und das Auflager 26 wird über eine mechanische Regelungsventilanordnung 86 geregelt. Durch das so gebildete erste Auflagersystem kann eine einmal kalibrierte horizontale Ausrichtung der Grundplatte 16 gehalten werden. Ein in den Auflagern vorliegender Druck, der im Maß für die Kraftbeaufschlagung der Auflager 22, 24, 26 und 27 repräsentiert, kann über Drucksensoren 92, 93 und 94 erfasst werden. Die Drucksensoren ergeben die gemessenen Werte in die Regelungseinrichtung 32 ein.

Eine Deformation der Grundplatte 16 bei hohen Werkstückmassen würde entsprechend zwischen den Auflagern bevorzugt auftreten. Eine Durchbiegung ist somit in erster Linie in einem Raum zwischen den Auflagern 22, 24, 26 und 27 gegeben. Eine Auflagerfläche 102, die die Auflager 22, 24, 26 und 27 zwischen sich aufspannen, ist daher in der Fig. 4 dargestellt und mit 102 bezeichnet. Vorzugsweise innerhalb dieser Auflagerfläche 102 ist daher das zweite Auflagersystem 30 vorgesehen. Die Auflager 52, 53, 54 und 55 des zweiten Auflagersystems 30 liegen daher innerhalb der Auflagerfläche 102. Die Auflager 52, 53, 54 und 55 sind jeweils als elektronisch geregelte Federeinrichtungen ausgebildet. Sie sind ebenfalls als zurückgeführte Vierpunktlagerung angeordnet. Ein elektronisches Regelungsventil 88 regelt das erste Auflager 52 und das vierte Auflager 55. Ein elektronisches Regelungsventil 89 regelt das zweites Auflager 53 und ein weiteres elektronisches Regelungsventil 90 regelt das dritte Auflager 54. Die Auflager 22, 24, 26 und 27 bilden daher jeweils eine Haupt-Luftfedereinrichtung aus. Die Auflager 52, 53, 54 und 55 bilden jeweils eine Neben-Luftfedereinrichtung aus.

In einer alternativen Ausgestaltung können die Auflager 52, 53, 54 und 55 auch als echte Vierpunktlagerung ausgebildet sein. Ein elektronisches Regelungsventil 88 regelt dann nur das erste Auflager 52. Ein elektronisches Regelungsventil 89 regelt das zweite Auflager 53. Ein elektronisches Regelungsventil 90 regelt das dritte Auflager 54. Ein weiteres elektronisches Regelungsventil (nicht dargestellt) regelt dann das vierte Auflager 55. Das vierte Auflager 55 ist ebenfalls durch die Regelungseinrichtung 32 geregelt bzw. gesteuert. So wird eine Vierpunktlagerung bereitgestellt, bei der jedes Auflager 52, 53, 54 und 55 individuell bzw. separat geregelt werden kann. Dies ermöglicht eine besonders gute Kompensation von Momentenbelastungen.

Auch die Neben-Luftfedereinrichtungen 52 bis 55 schließen zwischen sich eine Fläche ein, die mit 104 bezeichnet ist. Insbesondere schließt diese Fläche das geometrische Zentrum bzw. dessen senkrechte Projektion 96 auf die Oberfläche der Grundplatte 16, an der die Auflager aufliegen, ein. Durch die dargestellte Anordnung ist ein maximaler Abstand 98 eines der Auflager 52 bis 55 zu diesem geometrischen Zentrum 96 kleiner als ein minimaler Abstand der Auflager 22, 24, 26, 27 zu dem geometrischen Zwischenzentrum 96, der mit 100 bezeichnet ist. Die Auflager 52 bis 55 liegen somit innerhalb bzw. "zwischen" den Auflagern 22, 24, 26 und 27. Die Auflager 52 bis 55 sind auch näher zusammen um das geometrische Zentrum 96 herum angeordnet, so dass die Fläche 104 20% bis 40% der Auflagerfläche 102 beträgt, insbesondere 25%, 30% oder 35%, insbesondere 25% bis 35%. Auf diese Weise wird es möglich, eine zwischen den Auflagern 22, 24, 26 und 27 des ersten Auflagersystems 28 auftretende Deformation der Grundplatte 16 bei hohen Werkstückmassen, insbesondere in der Nähe des geometrischen Zentrums 96, mittels des zweiten Auflagersystems 30 zu kompensieren durch eine entsprechende Regelung über die Regelungseinrichtung 32.

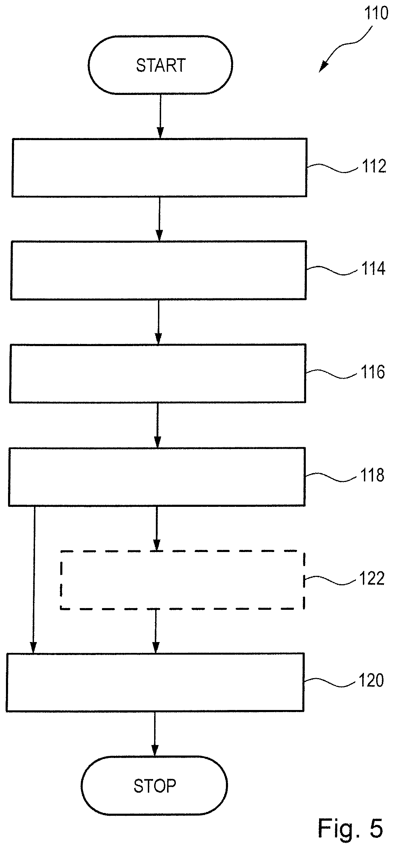

Die Fig. 5 zeigt eine Ausführungsform eines Verfahrens 110 zum Kompensieren großer Werkstückmassen.

Insbesondere kann zunächst in einem Schritt 112 ein Koordinatenmessgerät mit einem Messsystem zum Vermessen eines Werkstücks bereitgestellt werden, das des Weiteren eine Trägerstruktur zum Tragen des Messsystems und eine Grundplatte zum Abstützen des Werkstücks aufweist, wobei die Trägerstruktur in zumindest einer Richtung bewegbar an der Grundplatte geführt ist, und wobei das Koordinatenmessgerät des Weiteren ein erstes Auflagersystem mit mindestens drei Auflagern zum Abstützen der Grundplatte, ein zweites Auflagersystem und eine Regelungseinrichtung zur Regelung des zweiten Auflagersystems abhängig von einer Kraftbeaufschlagung des ersten Auflagersystems aufweist.

Es erfolgt ein Schritt des Kalibrierens 114 eines Referenzzustands der Grundplatte 16 mittels des ersten Auflagersystems 28. Dieser Referenzzustand kann beispielsweise eine Neigung bzw. horizontale Ausrichtung und/oder eine Kraftbeaufschlagung bzw. einen vorhandenen Druck in den Haupt-Federeinrichtungen 22, 24, 26, 27 des ersten Auflagersystems 28 aufweisen. Insbesondere die eine auf das erste Auflagersystem beaufschlagte Kraft repräsentierende Größe bilden diesen Referenzzustand ab.

Es erfolgt dann ein Schritt des Anordnens 116 eines mittels des Koordinatenmessgeräts 10 zu vermessenden Werkstücks 14 auf der Grundplatte 16.

Infolgedessen liegt an dem ersten Auflagesystem nicht mehr der Referenzzustand vor. Insbesondere ändern sich die anliegenden Drücke aufgrund der höheren beaufschlagten Gewichtskraft, die mechanischen Regelungsventilanordnungen in den Auflagern 22, 24, 26 und 27 andere, höhere Drück einstellen. Gegebenenfalls liegt auch eine Neigung der Grundplatte 16 vor.

Daher erfolgt ein Schritt des Erfassens 118 von Größen, die die von dem Werkstück 14 auf die mindestens drei Auflager 22, 24, 26, 27 des ersten Auflagersystems 28 beaufschlagten Kräfte repräsentieren.

Es erfolgt nun ein Regeln 120 des zweiten Auflagersystems 30 mittels der Regelungseinrichtung 32, so dass sich wieder der Referenzzustand einstellt. Dieser umfasst insbesondere die Wiederherstellung der in den Auflagern 22, 24, 26, 27 bzw. den Haupt-Luftfedereinrichtungen und des ersten Auflagersystems 28 anliegenden Drücken. Dies stellt sicher, dass die durch Werkstück 14 beaufschlagte Gewichtskraft durch das zweite Auflagersystem 30 aufgenommen wird. Auch eine ggf. vorliegende Neigung bzw. ein Moment in der Grundplatte 16 kann durch das zweite Auflagersystem 30 aufgenommen werden. Vorzugsweise ist bei der Durchführung des Verfahrens eine Anordnung wie in der Fig. 4 vorgesehen, so dass eine Kompensation von Gewichtskraftbeaufschlagungen und induzierten Momenten und Neigungen durch das Werkstück 14 vollkommen kompensiert werden können.

Grundsätzlich kann in einer Ausführungsform vor dem Durchführen des Schritt des Regelns 120 und nach dem Schritt des Erfassens 118 ein Schritt 122 erfolgen, in dem festgestellt wird, dass die von dem Werkstück auf die mindestens drei Auflager des ersten Auflagersystems 28 beaufschlagten Kräfte oberhalb eines vorbestimmten Schwellwerts liegen. Auf diese Weise wird sichergestellt, dass nicht bei jedem Werkstück 14 die zusätzliche Regelung durch das zweite Auflagersystem 30 abgeschaltet wird, sondern nur dann, wenn besonders hohe Werkstückmassen vorliegen und damit die Wahrscheinlichkeit einer Deformation der Grundplatte 16 gegeben ist, die eine zusätzliche Abstützung und ggf. notwendige Kompensation von Momenten und Neigungen der Grundplatte 16 durch das zweite Auflagesystem 30 notwendig macht.

## Patentansprüche

1. Koordinatenmessgerät (10), mit einem Messsystem (12) zum Vermessen eines Werkstücks (14), einer Trägerstruktur (20) zum Tragen des Messsystems, und mit einer Grundplatte (16) zum Abstützen des Werkstücks (14), wobei die Trägerstruktur (20) in zumindest einer Richtung bewegbar an der Grundplatte (16) geführt ist, und wobei das Koordinatenmessgerät (10) des Weiteren ein erstes Auflagersystem (28) mit mindestens drei Auflagern (22, 24, 26) zum Abstützen der Grundplatte (16) aufweist, **dadurch gekennzeichnet, dass** das Koordinatenmessgerät (10) des Weiteren ein zweites Auflagersystem (30) zum Abstützen der Grundplatte (16) und eine Regelungseinrichtung (32) zur Regelung des zweiten Auflagersystems (30) abhängig von einer Kraftbeaufschlagung des ersten Auflagersystems (28) aufweist.

2. Koordinatenmessgerät nach Anspruch 1, **dadurch gekennzeichnet, dass** die mindestens drei Auflager (22, 24, 26, 27) des ersten Auflagersystems (28) jeweils durch eine Haupt-Luftfedereinrichtung (22, 24, 26, 28) ausgebildet sind.

3. Koordinatenmessgerät nach Anspruch 2, **dadurch gekennzeichnet, dass** das erste Auflagersystem mindestens drei Regelungsventilanordnungen (84, 85, 85) zum Steuern der mindestens drei Haupt-Luftfedereinrichtungen (22, 24, 26) aufweist, insbesondere wobei die mindestens drei Regelungsventilanordnungen (84, 85, 85) jeweils eine mechanische Regelungsventilanordnung sind.

4. Koordinatenmessgerät nach einem der Ansprüche 1 bis 3, **dadurch gekennzeichnet, dass** das erste Auflagersystem (28) vier Haupt-Luftfedereinrichtungen (22, 24, 26, 27) aufweist, wobei einer ersten (22) und einer vierten (27) Haupt-Luftfedereinrichtung eine gemeinsame erste Regelungsventilanordnung (84) zugeordnet ist, wobei einer zweiten Haupt-Luftfedereinrichtungen eine zweite Regelungsventilanordnung (85) zugeordnet ist, und wobei einer dritten Haupt-Luftfedereinrichtung (26) eine dritte Regelungsventilanordnung (86) zugeordnet ist.

5. Koordinatenmessgerät nach einem der Ansprüche 1 bis 4, **dadurch gekennzeichnet, dass** das erste Auflagersystem (28) mindestens drei Kraftbeaufschlagungs-Sensoren (48, 92, 93, 94) zur Erfassung einer Größe aufweist, die eine auf mindestens ein Auflager (22, 24, 26, 27) beaufschlagte Kraft repräsentiert, insbesondere wobei die erfasste Größe ein Luftdruck ist.

6. Koordinatenmessgerät nach Anspruch 5, **dadurch gekennzeichnet, dass** jeder Regelungsventilanordnung (84, 85, 85) des ersten Auflagersystems (28) ein Kraftbeaufschlagungs-Sensor (48, 92, 93, 94) zugeordnet ist.

7. Koordinatenmessgerät nach einem der Ansprüche 1 bis 6, **dadurch gekennzeichnet, dass** das zweite Auflagersystem (30) mindestens eine Neben-Luftfedereinrichtung (52, 53, 54, 55) aufweist, die ein Auflager des zweiten Auflagersystems (30) ausbildet.

8. Koordinatenmessgerät nach einem der Ansprüche 1 bis 7, **dadurch gekennzeichnet, dass** das zweite Auflagersystem (30) mindestens drei Auflager (52, 53, 54, 55) aufweist, und wobei jedes Auflager durch eine Neben-Luftfedereinrichtung (52, 53, 54, 55) ausgebildet ist.

9. Koordinatenmessgerät nach Anspruch 8, **dadurch gekennzeichnet, dass** das zweite Auflagersystem (30) mindestens drei Regelungsventilanordnungen (88, 89, 90) zum Steuern der mindestens drei Neben-Luftfedereinrichtungen (52, 53, 54, 55) aufweist, insbesondere wobei die mindestens drei Regelungsventilanordnungen (88, 89, 90) jeweils eine elektronische Regelungsventilanordnung sind.

10. Koordinatenmessgerät nach einem der Ansprüche 1 bis 9, **dadurch gekennzeichnet, dass** eine Anzahl von Auflagern (22, 24, 26, 28) des ersten Auflagersystems (28) einer Anzahl von Auflagern (52, 53, 54, 55) des zweiten Auflagersystems (30) entspricht, und wobei eine Anzahl von Regelungsventilanordnungen (84, 85, 85) des ersten Auflagersystems (28) einer Anzahl von Regelungsventilanordnungen (88, 89, 90) des zweiten Auflagersystems (30) entspricht, und wobei eine Anzahl von Regelungsventilanordnungen (84, 85, 85) des ersten Auflagersystems (28) einer Anzahl von Kraftbeaufschlagungs-Sensoren (92, 93, 94) zur Erfassung einer Größe, die eine auf mindestens ein Auflager (22, 24, 26, 28) des ersten Auflagersystems (28) beaufschlagte Kraft repräsentiert, entspricht.

11. Koordinatenmessgerät nach einem der Ansprüche 1 bis 10, **dadurch gekennzeichnet, dass** die Auflager (52, 53, 54, 55) des zweiten Auflagersystems (30) zwischen den Auflagern (22, 24, 26, 28) des ersten Auflagersystems (28) an der Grundplatte (16) angeordnet sind.

12. Koordinatenmessgerät nach einem der Ansprüche 1 bis 11, **dadurch gekennzeichnet, dass** die Auflager (22, 24, 26, 28) des ersten Auflagersystems (28) eine Auflagerfläche (102) an der Grundplatte (16) aufspannen, wobei die Auflager (52, 53, 54, 55) des zweiten Auflagersystems (30) innerhalb der Auflagerfläche (102) an der Grundplatte (16) angeordnet sind.

13. Koordinatenmessgerät nach einem der Ansprüche 1 bis 12, **dadurch gekennzeichnet, dass** die Grundplatte (16) ein geometrisches Zentrum (96) aufweist, und wobei ein größter Abstand (98) eines Auflagers (52, 53, 54, 55) des zweiten Auflagersystems (30) zu dem geometrischen Zentrum (96) kleiner ist als ein kleinster Abstand (100) eines Auflagers (22, 24, 26, 28) des ersten Auflagersystems (28) zu dem geometrischen Zentrum (96).

14. Koordinatenmessgerät nach einem der Ansprüche 1 bis 13, **dadurch gekennzeichnet, dass** eine von den Auflagern (52, 53, 54, 55) des zweiten Auflagersystems (30) eingeschlossene Fläche (104) ein geometrisches Zentrum (96) der Grundplatte (16) beinhaltet, insbesondere wobei die von den Auflagern (52, 53, 54, 55) des zweiten Auflagersystems (30) eingeschlossene Fläche zwischen 20% und 40% der Größe einer von den Auflagern (22, 24, 26, 28) des ersten Auflagersystems (28) eingeschlossene Fläche (102) entspricht.

15. Verfahren (110) zum Kompensieren großer Werkstückmassen auf einem Koordinatenmessgerät (10) mit einem Messsystem (12) zum Vermessen eines Werkstücks (14), einer Trägerstruktur (20) zum Tragen des Messsystems, und mit einer Grundplatte (16) zum Abstützen des Werkstücks (14), wobei die Trägerstruktur (20) in zumindest einer Richtung bewegbar an der Grundplatte (16) geführt ist, und wobei das Koordinatenmessgerät (10) des Weiteren ein erstes Auflagersystem (28) mit mindestens drei Auflagern (22, 24, 26, 28) zum Abstützen der Grundplatte (16), ein zweites Auflagersystem (30) zum Abstützen der Grundplatte (16) und eine Regelungseinrichtung (32) zur Regelung des zweiten Auflagersystems (30) abhängig von einer Kraftbeaufschlagung des ersten Auflagersystems (28) aufweist, mit den folgenden Schritten:
Kalibrieren (114) eines Referenzzustands der Grundplatte (16) mittels des ersten Auflagersystems (28),
Anordnen (116) eines mittels des Koordinatenmessgeräts zu vermessenden Werkstücks (14) auf der Grundplatte (16),
Erfassen (118) von Größen, die die von dem Werkstück (14) auf die mindestens drei Auflager (22, 24, 26, 28) des erste Auflagersystems (28) beaufschlagten Kräfte repräsentieren, und
Regeln (120) des zweiten Auflagersystems (30) mittels der Regelungseinrichtung (32), so dass sich wieder der Referenzzustand einstellt.

## Claims

1. Coordinate measuring machine (10), with a measuring system (12) for measuring a workpiece (14), a carrier structure (20) for carrying the measuring system and a base plate (16) for supporting the workpiece (14), wherein the carrier structure (20) is movably guided in at least one direction on the base plate (16), and wherein the coordinate measuring machine (10) also has a first support system (28) with at least three supports (22, 24, 26) for supporting the base plate (16), **characterized in that** the coordinate measuring machine (10) also has a second support system (30) for supporting the base plate (16) and a control device (32) for controlling the second support system (30) on the basis of a force applied to the first support system (28).

2. Coordinate measuring machine according to Claim 1, **characterized in that** the at least three supports (22, 24, 26, 27) of the first support system (28) are respectively formed by a main air spring device (22, 24, 26, 28).

3. Coordinate measuring machine according to Claim 2, **characterized in that** the first support system has at least three control valve arrangements (84, 85, 85) for controlling the at least three main air spring devices (22, 24, 26), in particular wherein the at least three control valve arrangements (84, 85, 85) are in each case a mechanical control valve arrangement

4. Coordinate measuring machine according to one of Claims 1 to 3, **characterized in that** the first support system (28) has four main air spring devices (22, 24, 26, 27) wherein a first (22) and a fourth (27) main air spring device are assigned a shared first control valve arrangement (84), wherein a second main air spring device is assigned a second control valve arrangement (85), and wherein a third main air spring device (26) is assigned a third control valve arrangement (86).

5. Coordinate measuring machine according to one of Claims 1 to 4, **characterized in that** the first support system (28) has at least three applied force sensors (48, 92, 93, 94) for recording a variable that represents a force applied to at least one support (20, 24, 26, 27), in particular wherein the recorded variable is an air pressure.

6. Coordinate measuring machine according to Claim 5, **characterized in that** each control valve arrangement (84, 85, 85) of the first support system (28) is assigned an applied force sensor (48, 92, 93, 94).

7. Coordinate measuring machine according to one of Claims 1 to 6, **characterized in that** the second support system (30) has at least one secondary air spring device (52, 53, 54, 55), which forms a support of the second support system (30).

8. Coordinate measuring machine according to one of Claims 1 to 7, **characterized in that** the second support system (30) has at least three supports (52, 53, 54, 55), and wherein each support is formed by a secondary air spring device (52, 53, 54, 55).

9. Coordinate measuring machine according to Claim 8, **characterized in that** the second support system (30) has at least three control valve arrangements (88, 89, 90) for controlling the at least three secondary air spring devices (52, 53, 54, 55), in particular wherein the at least three control valve arrangements (88, 89, 90) are in each case an electronic control valve arrangement.

10. Coordinate measuring machine according to one of Claims 1 to 9, **characterized in that** a number of supports (22, 24, 26, 28) of the first support system (28) corresponds to a number of supports (52, 53, 54, 55) of the second support system (30), and wherein a number of control valve arrangements (84, 85, 85) of the first support system (28) corresponds to a number of control valve arrangements (88, 89, 90) of the second support system (30), and wherein a number of control valve arrangements (84, 85, 85) of the first support system (28) corresponds to a number of applied force sensors (92, 93, 94) for recording a variable that represents a force applied to at least one support (22, 24, 26, 28) of the first support system (28).

11. Coordinate measuring machine according to one of Claims 1 to 10, **characterized in that** the supports (52, 53, 54, 55) of the second support system (30) are arranged between the supports (22, 24, 26, 28) of the first support system (28) on the base plate (16).

12. Coordinate measuring machine according to one of Claims 1 to 11, **characterized in that** the supports (22, 24, 26, 28) of the first support system (28) create a supporting area (102) on the base plate (16), wherein the supports (52, 53, 54, 55) of the second support system (30) are arranged within the supporting area (102) on the base plate (16).

13. Coordinate measuring machine according to one of Claims 1 to 12, **characterized in that** the base plate (16) has a geometrical center (96), and wherein a greatest distance (98) of a support (52, 53, 54, 55) of the second support system (30) from the geometrical center (96) is less than a smallest distance (100) of a support (22, 24, 26, 28) of the first support system (28) from the geometrical center (96).

14. Coordinate measuring machine according to one of Claims 1 to 13, **characterized in that** an area (104) enclosed by the supports (52, 53, 54, 55) of the second support system (30) includes a geometrical center (96) of the base plate (16), in particular wherein the area enclosed by the supports (52, 53, 54, 55) of the second support system (30) corresponds to between 20% and 40% of the size of an area (102) enclosed by the supports (22, 24, 26, 28) of the first support system (28).

15. Method (110) for compensating for large workpiece masses on a coordinate measuring machine (10) with a measuring system (12) for measuring a workpiece (14), a carrier structure (20) for carrying the measuring system and a base plate (16) for supporting the workpiece (14), wherein the carrier structure (20) is movably guided in at least one direction on the base plate (16), and wherein the coordinate measuring machine (10) also has a first support system (28) with at least three supports (22, 24, 26, 28) for supporting the base plate (16), a second support system (30) for supporting the base plate (16) and a control device (32) for controlling the second support system (30) on the basis of a force applied to the first support system (28), comprising the following steps:
calibrating (114) a reference state of the base plate (16) by means of the first support system (28),
arranging (116) on the base plate (16) a workpiece (14) to be measured by means of the coordinate measuring machine,
recording (118) variables that represent the forces applied to the at least three supports (22, 24, 26, 28) of the first support system (28) by the workpiece (14) and
controlling (120) the second support system (30) by means of the control device (32) in such a way that the reference state is restored.

## Revendications

1. Appareil de mesure de coordonnées (10), comportant un système de mesure (12) servant à mesurer une pièce (14), une structure porteuse (20) servant à supporter le système de mesure, et comportant une plaque de base (16) servant d'appui à la pièce (14), dans lequel la structure porteuse (20) est guidée de manière mobile sur la plaque de base (16) dans au moins une direction, et dans lequel l'appareil de mesure de coordonnées (10) présente en outre un premier système de supports (28) comportant au moins trois supports (22, 24, 26) servant d'appui à la plaque de base (16), **caractérisé en ce que** l'appareil de mesure de coordonnées (10) présente en outre un deuxième système de support (30) servant d'appui à la plaque de base (16) et un dispositif de régulation (32) servant à réguler le deuxième système de supports (30) en fonction de la force appliquée au premier système de supports (28).

2. Appareil de mesure de coordonnées selon la revendication 1, **caractérisé en ce que** les au moins trois supports (22, 24, 26, 27) du premier système de supports (28) sont respectivement formés par un dispositif de suspension pneumatique principal (22, 24, 26, 28).

3. Appareil de mesure de coordonnées selon la revendication 2, **caractérisé en ce que** le premier système de supports présente au moins trois ensembles de soupapes de régulation (84, 85, 85) servant à commander les au moins trois dispositifs de suspension pneumatique principaux (22, 24, 26), notamment dans lequel les au moins trois ensembles de soupapes de régulation (84, 85, 85) sont chacun un ensemble de soupapes de régulation mécanique.

4. Appareil de mesure de coordonnées selon l'une des revendications 1 à 3, **caractérisé en ce que** le premier système de supports (28) présente quatre dispositifs de suspension pneumatique principaux (22, 24, 26, 27), dans lequel un premier ensemble de soupapes de régulation commun (84) est associé à des premier (22) et quatrième (27) dispositifs de suspension pneumatique principaux, dans lequel un deuxième ensemble de soupapes de régulation (85) est associé à un deuxième dispositif de suspension pneumatique principal, et dans lequel un troisième ensemble de soupapes de régulation (86) est associé à un troisième dispositif de suspension pneumatique principal (26).

5. Appareil de mesure de coordonnées selon l'une des revendications 1 à 4, **caractérisé en ce que** le premier système de supports (28) présente au moins trois capteurs d'application de force (48, 92, 93, 94) servant à détecter une grandeur représentant une force appliquée à au moins un support (22, 24, 26, 27), notamment dans lequel la grandeur mesurée est une pression pneumatique.

6. Appareil de mesure de coordonnées selon la revendication 5, **caractérisé en ce qu'**un capteur d'application de force (48, 92, 93, 94) est associé à chaque ensemble de soupapes de régulation (84, 85, 85) du premier système de supports (28).

7. Appareil de mesure de coordonnées selon l'une des revendications 1 à 6, **caractérisé en ce que** le deuxième système de supports (30) présente au moins un dispositif de suspension pneumatique secondaire (52, 53, 54, 55) qui forme un support du deuxième système de supports (30).

8. Appareil de mesure de coordonnées selon l'une des revendications 1 à 7, **caractérisé en ce que** le deuxième système de supports (30) présente au moins trois supports (52, 53, 54, 55) et **en ce que** chaque support est formé par un dispositif de suspension pneumatique secondaire (52, 53, 54, 55).

9. Appareil de mesure de coordonnées selon la revendication 8, **caractérisé en ce que** le deuxième système de supports (30) comprend au moins trois ensembles de soupapes de régulation (88, 89, 90) servant à commander les au moins trois dispositifs de suspension pneumatique secondaires (52, 53, 54, 55), notamment dans lequel les au moins trois ensembles de soupapes de régulation (88, 89, 90) sont chacun un ensemble de soupapes de régulation électronique.

10. Appareil de mesure de coordonnées selon l'une des revendications 1 à 9, **caractérisé en ce qu'**un nombre de supports (22, 24, 26, 28) du premier système de supports (28) correspond à un nombre de supports (52, 53, 54, 55) du deuxième système de supports (30), et dans lequel un nombre d'ensembles de soupapes de régulation (84, 85, 85) du premier système de supports (28) correspond à un nombre de soupapes de régulation (88, 89, 90) du deuxième système de supports (30), et dans lequel un nombre d'ensembles de soupapes de régulation (84, 85, 85) du premier système de supports (28) correspond à un nombre de capteurs d'application de force (92, 93, 94) servant à détecter une grandeur représentant une force appliquée à au moins un support (22, 24, 26, 28) du premier système de supports (28).

11. Appareil de mesure de coordonnées selon l'une des revendications 1 à 10, **caractérisé en ce que** les supports (52, 53, 54, 55) du deuxième système de supports (30) sont disposés sur la plaque de base (16) entre les supports (22, 24, 26, 28) du premier système de supports (28).

12. Appareil de mesure de coordonnées selon l'une des revendications 1 à 11, **caractérisé en ce que** les supports (22, 24, 26, 28) du premier système de supports (28) couvrent une zone de support (102) sur la plaque de base (16), dans lequel les supports (52, 53, 54, 55) du deuxième système de supports (30) sont disposés sur la plaque de base (16) à l'intérieur de la zone de support (102).

13. Appareil de mesure de coordonnées selon l'une des revendications 1 à 12, **caractérisé en ce que** la plaque de base (16) présente un centre géométrique (96), et dans lequel une distance maximale (98) d'un support (52, 53, 54, 55) du deuxième système de supports (30) par rapport au centre géométrique (96) est inférieure à une distance minimale (100) d'un support (22, 24, 26, 28) du premier système de supports (28) par rapport au centre géométrique (96).

14. Appareil de mesure de coordonnées selon l'une des revendications 1 à 13, **caractérisé en ce qu'**une zone (104) délimitée par les supports (52, 53, 54, 55) du deuxième système de supports (30) contient un centre géométrique (96) de la plaque de base (16), notamment dans lequel la zone délimitée par les supports (52, 53, 54, 55) du deuxième système de supports (30) représente entre 20% et 40% de la taille d'une zone (102) délimitée par les supports (22, 24, 26, 28) du premier système de supports (28).

15. Procédé (110) servant à compenser les masses importantes de pièces sur un appareil de mesure de coordonnées (10) comportant un système de mesure (12) servant à mesurer une pièce (14), une structure porteuse (20) servant d'appui au système de mesure, et une plaque de base (16) servant à supporter la pièce (14), dans lequel la structure porteuse (20) est guidée de manière mobile sur la plaque de base (16) dans au moins une direction, et dans lequel l'appareil de mesure de coordonnées (10) présente en outre un premier système de supports (28) comportant au moins trois supports (22, 24, 26, 28) servant d'appui à la plaque de base (16), un deuxième système de supports (30) servant d'appui à la plaque de base (16) et un dispositif de régulation (32) servant à réguler le deuxième système de supports (30) en fonction de la force appliquée au premier système de supports (28), comprenant les étapes suivantes :
étalonner (114) un état de référence de la plaque de base (16) au moyen du premier système de supports (28),
disposer (116) une pièce (14) à mesurer au moyen de l'appareil de mesure de coordonnées sur la plaque de base (16),
détecter (118) des grandeurs représentant les forces appliquées par la pièce (14) aux au moins trois supports (22, 24, 26, 28) du premier système de supports (28), et
réguler (120) le deuxième système de supports (30) au moyen du dispositif de régulation (32) de manière à rétablir l'état de référence.
